**Europäisches Patentamt**

(19) **European Patent Office**

**Office européen des brevets**

(11) Veröffentlichungsnummer: **0 035 506**
**B1**

(12) **EUROPÄISCHE PATENTSCHRIFT**

(45) Veröffentlichungstag der Patentschrift:
06.03.85

(51) Int. Cl.⁴: **B 62 B 13/16**

(21) Anmeldenummer: **80901324.6**

(22) Anmeldetag: **21.07.80**

(86) Internationale Anmeldenummer:
**PCT/CH 80/00088**

(87) Internationale Veröffentlichungsnummer:
**WO 81/00698 (19.03.81 Gazette 81/7)**

(54) **GLEITGERÄT, INSBESONDERE ZUM GLEITEN AUF SCHNEE UND EIS.**

(30) Priorität: **11.09.79 CH 8230/79**

(43) Veröffentlichungstag der Anmeldung:
**16.09.81 Patentblatt 81/37**

(45) Bekanntmachung des Hinweises auf die Patenterteilung:
**06.03.85 Patentblatt 85/10**

(84) Benannte Vertragsstaaten:
**AT DE FR GB LU NL SE**

(56) Entgegenhaltungen:
**DE - A - 2 246 164**
**GB - A - 10 953**
**US - A - 3 372 944**
**US - A - 3 799 566**
**US - A - 3 884 490**
**US - A - 4 170 367**
**US - A - 4 206 933**

(73) Patentinhaber: **POLYPATENT AG, Am Schilf, CH-6317 Oberwil (CH)**

(72) Erfinder: **FLACHSMANN, Jean-Paul, Am Schilf, CH-6317 Oberwil (CH)**

(74) Vertreter: **Arato, Laszlo, Seebuchtstrasse 19, CH-6374 Buochs (CH)**

## Beschreibung

Die Erfindung betrifft ein Gleitgerät, insbesondere zum Gleiten auf Schnee und Eis, mit einer eine Lauffläche und eine Sitzfläche aufweisenden Gleitunterlage für mindestens eine Person.

In Schnee und Eis verwendbare Gleitgeräte sind in verschiedenen Ausführungen bekannt. Neben den seit langer Zeit bekannten Gleitgeräten, die als Schlitten mit festem Schlittengestell ausgeführt sind, sind viele Formen von Gleitgeräten bekannt, die insbesondere aus Kunststoff hergestellt sind. Bei einer einfachen bekannten Ausführungsform gemäß dem Oberbegriff von Patentanspruch 1 (US-A-4 170 367, JP-A-54-040 448) ist das Gleitgerät im wesentlichen eine dünne, doppellagige Matte mit einer dazwischenliegenden dünnen Polsterschicht. Vornseitig ist ein Handgriff angeordnet, mit dem der Fahrer den Vorderteil der Matte anhebt, um damit das Gleiten zu ermöglichen. Diese bekannte Ausführungsform entspricht zweifellos dem Wunsch des Benützers nach einem leichten, wenig voluminösen Gleitgerät, jedoch weist es den Nachteil auf, daß die durch das Anheben des stirnseitigen Handgriffs gebildete Wölbung der Matte insbesondere bei Weichschnee bremsend wirkt, da sich dort eine Schneeanhäufung bildet. In einer anderen Ausführungsform gemäß dem Oberbegriff von Patentanspruch 1 (US-A-4 206 933, JP-A-54-097 942) ist das Gleitgerät ein in mehrere Kammern unterteilter, aufblasbarer Körper mit Schlittenform. Im Vorderteil des Gerätes sind beidseitig Griffe angebracht, um das Zurücklehnen des Fahrers zwecks Entlastung des Schlittenvorderteils zu ermöglichen. Diese Auführungsform läßt sich bei Nichtbenützung wie eine entleerte Luftmatratze zusammenlegen und somit auf einen Bruchteil des aufgeblasenen Volumens verkleinern. Der Nachteil dieses Gerätes ist jedoch, daß die Volumenreduktion nur für die außerbetriebliche Lagerung von Vorteil ist, denn der Benützer wird kaum nach jeder Talfahrt das Gerät entleeren, um die Erleichterung des Transportes auf die Anhöhe in Anspruch zu nehmen. Gemeinsamer Nachteil beider Geräte ist, daß sie auf die althergebrachte Art zu lenken sind, d. h. daß die Änderung der Fahrtrichtung ausschließlich auf das Bremsen des Fahrers mit den nach vorne gestreckten Füßen zu erfolgen hat.

Der Erfindung liegt die Aufgabe zugrunde, ein Gleitgerät der eingangs beschriebenen Art so auszugestalten, daß es unter Beibehaltung des Vorteils einer leichten und platzsparenden Ausführung in allen Schneeverhältnissen gute Gleiteigenschaften aufweist und leicht steuerbar ist. Diese Aufgabe wird gemäß der Erfindung dadurch gelöst, daß die Gleitunterlage als formfester Schild mit mindestens zwei Schildteilen ausgebildet ist, die durch ein in der Längsachse des Gleitgeräts verlaufendes Scharnierband miteinander verbunden sind und daß die Gleitunterlage zwei, beidseits der Sitzfläche angeordnete Handgriffe aufweist, vorzugsweise mit einer etwa durch das Zentrum des Sitzplatzes gehenden Verbindungslinie der Griffmitten. Durch das in der Längsachse des Gleitgeräts verlaufende Scharnierband wird erreicht, daß das Gleitgerät beim Gleiten in einfacher Weise Richtungsänderungen auszuführen erlaubt. Gleichzeitig wird durch das Scharnierband das Zusammenklappen des Schildes ermöglicht, wodurch das Gleitgerät trotz seiner formfesten Ausführung auf kleine Dimensionen gebracht und leicht transportiert werden kann.

Das Gleitgerät kann in zusammengeklapptem Zustand als Kleiderbügel verwendet werden.

Die Erfindung ist in der Zeichnung in einigen Ausführungsbeispielen dargestellt und nachfolgend beschrieben. Es zeigt

Fig. 1 eine Draufsicht eines erfindungsgemäßen Gleitgeräts,

Fig. 2 einen Schnitt des Gleitgeräts nach Fig. 1 längs der Linie II-II in Fig. 1,

Fig. 3 einen vergrößert dargestellten Teilschnitt des Gleitgeräts nach Fig. 1 längs der Linie III-III in Fig. 1,

Fig. 4 eine Draufsicht einer weiteren Ausführungsform des erfindungsgemäßen Gleitgeräts,

Fig. 5 einen vergrößert dargestellten Teilschnitt des Gleitgeräts nach Fig. 4 längs der Linie V-V in Fig. 4 und

Fig. 6 eine Variante eines Details des Gleitgeräts nach Fig. 4.

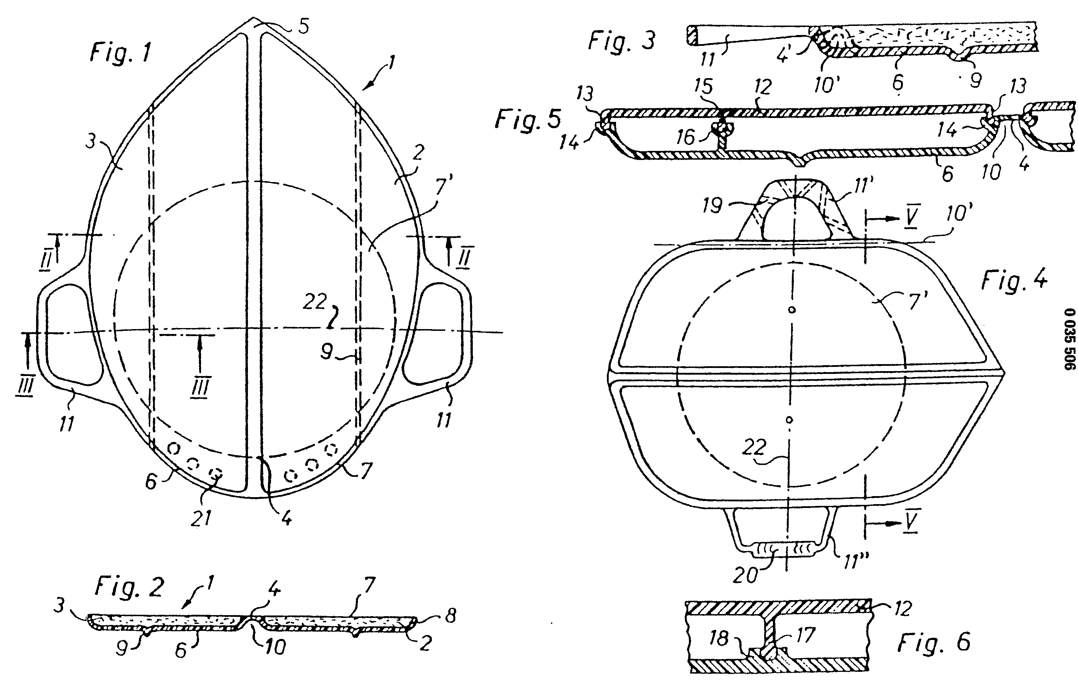

Das in Fig. 1 dargestellte Gleitgerät weist eine Gleitunterlage 1 in Form eines Schildes auf. Die Gleitunterlage 1 weist zwei Schildteile 2, 3 auf, die, wie aus Fig. 2 ersichtlich ist, durch ein Scharnierband 4 miteinander verbunden sind. Wesentlich ist, daß das Scharnierband in Richtung der Längsachse 5 der Gleitunterlage 1 verläuft. Die Ausführung nach Fig. 1—3 weist ein einziges Scharnierband 4 auf, doch könnte die Gleitunterlage 1 auch mit mehreren, parallel zueinander verlaufenden Scharnierbändern 5 versehen sein. Entsprechend der größeren Zahl von Scharnierbändern 5 wäre dann auch die Zahl der Teilschilde 2, 3 entsprechend größer.

Wie aus Fig. 2 ersichtlich ist, weist die Gleitunterlage 1 eine Lauffläche 6 und eine Sitzfläche 7 auf. Die Lauffläche 6 ist zweckmäßig als eine formfeste, dünnwandige Hohlschale, vorzugsweise aus einem Kunststoff, z. B. Polyäthylen, ausgebildet. Die eine flache Schale bildende Hohlschale 6 weist einen gewölbten Außenrand 8 und in jedem Schildteil 2, 3 eine Leitkufe 9 auf. Es kann auch mehr als eine Leitkufe 9 in einem Schildteil 2, 3 angeordnet sein. Das Scharnierband 4 liegt zweckmäßig in dem Bereich der Sitzfläche 7, so daß es dadurch einen zwischen den Schildteilen 2, 3 gebildete Rille 10 abschließt. Die Rille 10 weist, siehe Fig. 2, eine gegen die Lauffläche 6 erweiternde Form auf. Wird der Übergang der beiden Seitenflächen der Rille 10 in die eigentliche Lauffläche 6 kantig ausgeführt, wird dadurch eine zusätzliche Führungswirkung erreicht.

Die Sitzfläche 7 wird zweckmäßig aus einem Weichmaterial, vorzugsweise aus einem Kunststoffschaum, wie z. B. Polyäthylenschaum gebildet, wobei das Material zweckmäßig den gesamten Hohlraum der Lauffläche 6 ausfüllt.

Wie aus Fig. 1 ersichtlich ist, sind an beiden Seiten Handgriffe 11 angeordnet, mit Hilfe deren sich der Fahrer festhält und die er zur Ausführung von Richtungsänderungen benützen kann. Richtungsänderungen werden dadurch eingeleitet, daß durch Verlagerung des Schwerpunkts des Fahrers eine Entlastung eines der Schildteile 2, 3 eintritt, wobei z. B. durch Entlasten des rechten Schildteils 2 durch eine entsprechende Belastungserhöhung des linken Schildteils 3 die Einleitung einer Richtungsänderung nach links und beim Entlasten des Schildteils 3 eine entgegengesetzte Richtungsänderung erfolgt. Eine Richtungsänderung wird zudem durch Ziehen des entsprechenden Handgriffs und Eintauchen des entsprechenden Fußes verstärkt.

In Fig. 3 ist die Partie um den Handgriff 11 vergrößert dargestellt. Die Handgriffe 11 sind zweckmäßig aus demselben Material wie die Lauffläche 6 hergestellt. In Fig. 3 sind die Handgriffe 11 fest mit der Lauffläche 6 verbunden. Es ist aber auch möglich, wie dies gestrichelt angedeutet ist, den Handgriff 11 mittels eines Scharnierbandes 4', vorzugsweise unter Bildung einer Längsrille 10', mit der Lauffläche 6 zu verbinden. In diesem Fall ist es zweckmäßig, anstelle der Schildform nach Fig. 1 diejenige nach Fig. 4 zu wählen. Die Lage der Längsrille 10' ist durch eine strichpunktierte Linie angedeutet.

Das in Fig. 4 und 5 dargestellte Gleitgerät weist ebenfalls eine harte Lauffläche 6 ähnlicher Form wie in Fig. 1 auf. Zwischen den beiden Schildteilen 2, 3 ist das Scharnierband 4 unter Bildung der Rille 10 angeordnet. Dagegen unterscheidet sich die Sitzfläche 12 von der Sitzfläche 7 der Ausführung nach Fig. 1–3; die Sitzfläche 12 ist als formfester Deckel ausgebildet, an dessen Rändern Verbindungsstege 13 angeordnet sind, die in Randrillen 14 der Lauffläche 6 einrasten bzw. einschnappen. Formschlüssig bedeutet in diesem Zusammenhang, daß auch keine Verschiebung der Lauffläche 6 gegenüber der Sitzfläche 12 möglich ist, was z. B. durch Einbau von Querstegen in den Randrillen 14 erreicht wird.

Soll eine größere Formfestigkeit der Lauf- und der Sitzfläche 6, 12 erreicht werden, können weitere Schnappverbindungen zwischen der Gleitfläche 6 und der Sitzfläche 12 angeordnet werden. Wie aus Fig. 5 ersichtlich ist, können dies Stege 15, 16 sein, die in beliebiger Anordnung vorgesehen werden können. Anstelle der Stege 15, 16 können zwischen der Gleitfläche 6 und der Sitzfläche 12, siehe Fig. 6, Stützen in Form von an der Sitzfläche 12 angeordneten Säulen 17 vorgesehen werden, die in einen Sockel 18 der Gleitfläche 6 formschlüssig einrasten. Diese Stützen 17, 18 verhindern eine Verschiebung der Gleitfläche 6 gegenüber der Sitzfläche 12.

In Fig. 4 sind zwei verschiedene Formen von Handgriffen 11', 11" dargestellt. Der Handgriff 11' ist als Hohlkörper mit einer Verrippung 19 ausgebildet, während der Handgriff 11" einen massiven Griffteil 20 aufweist.

Bereits die bei der Ausführungsform nach Fig. 1 und 5 verwendeten, als Hohlschalen ausgebildeten Laufflächen 6 geben den Schildteilen eine ausreichende Formfestigkeit. Falls jedoch die elastische Verformung durch das Gewicht des Fahrers zu groß ist, kann durch Anordnung der Stege 15, 16 bzw. der Stützen 17, 18 die erforderliche Formfestigkeit erreicht werden. Eine genügende Formfestigkeit liegt dann vor, wenn die vom Scharnierband 4 gebildete Rille 10 eine gute Führung im Schnee und Eis unter Vermeidung des Eingrabens des stirnseitigen Teils der Gleitunterlage 1 im Tiefschnee bei zu großer Formfestigkeit einerseits und der Bildung eines Schneestaus, d. h. einer stirnseitigen Schneeanhäufung, bei zu geringer Formfestigkeit andererseits gewährleistet.

Bei der Ausführung nach Fig. 5, die ebenfalls eine formfeste und daher wenig verformbare Ausführung darstellt, bilden die Schildteile 2, 3 jeweils einen geschlossenen Hohlkörper. Hierbei ist aber der von den beiden Teilen gebildete Hohlraum nicht ausgefüllt. Es ist nun ebenfalls möglich, die Schildteile als einen einzigen Hohlkörper zu formen, wobei jedoch zweckmäßig mehr als zwei Schildteile hergestellt und durch entsprechende Scharnierteile 4 miteinander verbunden werden. Es entsteht dadurch ein schildförmiges Gleitgerät, das mehrere in Richtung der Längsachse 5 sich erstreckende Hohlkörper aufweist, die durch Scharnierbänder 4 miteinander verbunden sind. Die Eigenschaften eines solchen Gleitgeräts sind dieselben wie bei einem Gerät nach Fig. 4 und 5. Auch ist die Formsteifigkeit eines solchen Geräts mindestens so groß wie bei einem Gerät nach Fig. 4 und 5.

In Fig. 1 und 4 ist der Sitzplatz 7', den der Fahrer einnimmt, gestrichelt eingezeichnet. Der Sitzplatz 7' kann durch entsprechende Formgebung der Sitzfläche, z. B. durch eine flache Einbuchtung definiert werden. Es ist aber auch möglich, den Sitzplatz 7' ohne besondere Formgebung, z. B. durch eine unterschiedliche Farbe, zu markieren, jedoch ist auch das Weglassen einer Markierung möglich, damit der Fahrer selbst den für ihn geeigneten Sitzplatz 7' herausfindet. Zweckmäßig ist es, daß die durch die Mitte der Handgriffe 11, 11', 11" gehende Verbindungslinie 22 etwa durch das Zentrum des Sitzplatzes 7' geht. Aus Fig. 4 ist zudem erkennbar, daß nicht nur die Verbindungslinie 22 der Griffmitten etwa durch das Zentrum des Sitzplatzes 7' geht, sondern das Zentrum des Sitzplatzes 7 seinerseits im Bereich des Zentrums der Gleitunterlage 1 liegt. Durch die Anordnung des Sitzplatzes 7' in der geschilderten Weise bezüglich der Verbindungslinie 22 der Griffmitten bzw. bezüglich des Zentrumsbereiches der Gleitunterlage 1 wird erreicht, daß die zur Richtungsänderung auszuübende Hebelwirkung an den Handgriffen optimiert und die Lenkbarkeit des Gleitgeräts durch Erreichen eines gleichmäßigen Bodendrucks verbessert wird.

Das beschriebene Gleitgerät ist vor allem zum Gleiten auf Schnee und Eis vorgesehen, doch kann es auch auf Sanddünen und anderen entsprechend präparierten Hängen verwendet werden.

**Patentansprüche**

1. Gleitgerät, insbesondere zum Gleiten auf Schnee und Eis, mit einer eine Lauffläche (6) und eine Sitzfläche (7) aufweisenden Gleitunterlage (1) für mindestens eine Person, dadurch gekennzeichnet, daß die Gleitunterlage (1) als formfester Schild mit mindestens zwei Schildteilen (2, 3) ausgebildet ist, die durch ein in der Längsachse (5) des Gleitgerätes verlaufendes Scharnierband (4) miteinander verbunden sind, und daß die Gleitunterlage (1) zwei beidseits der Sitzfläche angeordnete Handgriffe (11, 11', 11") aufweist, vorzugsweise mit einer etwa durch das Zentrum des Sitzplatzes (7') gehenden Verbindungslinie (22) der Griffmitten.

2. Gleitgerät nach Anspruch 1, dadurch gekennzeichnet, daß das Scharnierband (4) den Abschluß einer zwischen den Schildteilen (2, 3) gebildeten, gegen die Lauffläche (6) offenen und sich zur Lauffläche (6) hin erweiternden Rille (10) bildet.

3. Gleitgerät nach Anspruch 1 oder 2, dadurch gekennzeichnet, daß die Schildteile (2, 3) aus mindestens einer die Lauffläche (6) bildenden Hohlschale gebildet sind, auf denen sich eine Sitzfläche (7) befindet.

4. Gleitgerät nach Anspruch 3, dadurch gekennzeichnet, daß die Sitzfläche (7) aus einem Weichmaterial, z. B. einem Kunststoffschaum geformt ist.

5. Gleitgerät nach Anspruch 3, dadurch gekennzeichnet, daß der Sitzplatz (7') der Sitzfläche mit seinem Zentrum im Bereich des Zentrums der Gleitunterlage (1) angeordnet ist.

6. Gleitgerät nach Anspruch 1 oder 3, dadurch gekennzeichnet, daß der Außenrand (8) der Lauffläche (6) nach oben gewölbt ist.

7. Gleitgerät nach Anspruch 3, dadurch gekennzeichnet, daß der Schildteil (2, 3) als geschlossener Hohlkörper ausgebildet ist.

8. Gleitgerät nach Anspruch 5, dadurch gekennzeichnet, daß der als Schildteil (2, 3) ausgebildete Hohlkörper aus zwei Schalenteilen (6, 12) besteht, die formschlüssig, z. B. mit Schnappverbindungen (13, 14), an den Schalenrändern miteinander verbunden sind.

9. Gleitgerät nach Anspruch 8, dadurch gekennzeichnet, daß die Schalenteile (6, 12) miteinander formschlüssig verbindbare Stützrippen (15, 16) oder Säulen (17, 18) aufweisen.

10. Gleitgerät nach Anspruch 8, dadurch gekennzeichnet, daß die Handgriffe durch ein Scharnierband (4') mit der Gleitunterlage (1) gelenkig verbunden sind.

11. Gleitunterlage nach Anspruch 1, dadurch gekennzeichnet, daß an den Laufflächen jedes Schildteils (2, 3) mindestens eine parallel zum Scharnierband (4) verlaufende Kufe (9) angeordnet ist.

12. Gleitgerät nach Anspruch 1, dadurch gekennzeichnet, daß an bzw. in der Lauffläche (6) Öffnungen (21) für den Schmelzwasseraustritt angeordnet sind.

**Claims**

1. Sliding device, especially for sliding on snow and ice, with a slider base (1) comprising a running surface (6) and a seating surface (7) for at least one person, characterized in that the slider base (1) is constructed as a rigid shield with at least two shield components (2, 3) which are mutually joined by a hinge strip (4) extending in the longitudinal axis (5) of the sliding device, and in that the slider base (1) comprises two handgrips (11, 11', 11") arranged at both sides of the seating surface, preferably with a chord connecting the midpoints of the grips passing approximately through the center of the seat (7').

2. Sliding device according to claim 1, characterized in that the hinge strip (4) forms the closure of a groove (10) formed between the shield components (2, 3), open toward the running surface (6) and broadening toward the running surface (6).

3. Sliding device according to claim 1 or 2, characterized in that the shield components (2, 3) are formed from at least one concave shell forming the running surface (6) and upon which a seating surface (7) is situated.

4. Sliding device according to claim 3, characterized in that the seating surface (7) is formed from a soft material, e. g. a plastic foam.

5. Sliding device according to claim 3, characterized in that the seat (7') of the seating surface is arranged with its center in the region of the center of the slider base (1).

6. Sliding device according to claim 1 or 3, characterized in that the outer edge (8) of the running surface (6) is upwardly curved.

7. Sliding device according to claim 3, characterized in that the shield component (2, 3) is constructed as a closed hollow body.

8. Sliding device according to claim 5, characterized in that the hollow body constructed as a shield component (2, 3) consists of two shell components (6, 12) which are mutually interlockingly joined at the shelledges, e. g. with snap connectors (13, 14).

9. Sliding device according to claim 8, characterized in that the shell components (6, 12) comprise bracing ribs (15, 16) or posts (17, 18) capable of being mutually interlockingly connected.

10. Sliding device according to claim 8, characterized in that the handgrips are hingedly connected with the slider base (1) by a hinge strip (4').

11. Sliding device according to claim 1, characterized in that at least one runner (9) is arranged on the running surfaces of each shield component (2, 3) parallel to the hinge strip (4).

12. Sliding device according to claim 1, characterized in that apertures (21) for the escape of thawed water are arranged on, respectively in, the running surface (6).


**Revendications**

1. Luge ou analogue, en particulier pour glisser sur la neige et la glace, comportant un support de glissement (1) pour au moins une personne, ce support étant pourvu d'une surface de glissement (6) et d'une surface d'assie (7), caractérisée en ce que le support de glissement (1) est constitué sous la forme d'un bouclier rigide avec au moins deux parties (2, 3) qui sont reliées l'une à l'autre par une bande-charnière (4) s'étendant selon l'axe longitudinal (5) de la luge ou analogue, et en ce que le support de glissement (1) comporte deux poignées (11, 11', 11'') disposées des deux côtés de la surface d'assie, avec de préférence entre les milieux des poignées une ligne de liaison (22) passant approximativement par le centre de l'emplacement d'assie (7').

2. Luge ou analogue selon la revendication 1, caractérisée en ce que la bande-charnière (4) constitue la délimitation d'une gorge (10) constituée entre les deux parties (2, 3), s'ouvrant vers la surface de glissement (6) et allant en s'élargissant vers cette surface de glissement (6).

3. Luge ou analogue selon la revendication 1 ou 2, caractérisée en ce que les parties (2, 3) sont constituées d'au moins une coque creuse constituant la surface de glissement (6), sur laquelle se trouve la surface d'assie (7).

4. Luge ou analogue selon la revendication 3, caractérisée en ce que la surface d'assie (7) est formée d'un matériau mou, par exemple d'une mousse de matière synthétique.

5. Luge ou analogue selon la revendication 3, caractérisée en ce que l'emplacement d'assie est disposé avec son centre situé au voisinage du centre du support de glissement (1).

6. Luge ou analogue selon la revendication 1 ou 3, caractérisée en ce que le bord extérieur (8) de la surface de glissement (6) est recourbé vers le haut.

7. Luge ou analogue selon la revendication 3, caractérisée en ce que la partie de bouclier (2, 3) est constituée sous la forme d'un corps creux fermé.

8. Luge ou analogue selon la revendication 5, caractérisée en ce que le corps creux constituant la partie de bouclier (2, 3) est formé de deux coques (6, 12) qui sont reliées l'une à l'autre par complémentarité de formes, par exemple par des liaisons à encliquetage (13, 14) prévues sur les bords des coques.

9. Luge ou analogue selon la revendication 8, caractérisée en ce que les coques (6, 12) comportent des nervures de soutien (15, 16) pouvant être reliées l'une à l'autre par complémentarité des formes, ou des étais (17, 18).

10. Luge ou analogue selon la revendication 8, caractérisée en ce que les poignées sont reliées de façon articulée au support de glissement (1) par une bande-charnière (4').

11. Luge ou analogue selon la revendication 1, caractérisée en ce que sur les surfaces de glissement de chaque partie de bouclier (2, 3) est disposé au moins un patin (9) s'étendant parallèlement à la bande-charnière (4).

12. Luge ou analogue selon la revendication 1, caractérisée en ce que sur ou dans les surfaces de glissement (6) sont prévus des trous (21) pour l'évacuation de l'eau de fonte.

*Fig. 1*

*Fig. 2*

*Fig. 3*

*Fig. 4*

*Fig. 5*

*Fig. 6*

0 035 506